# EUROPÄISCHE PATENTANMELDUNG

(11) **EP 1 849 576 A1**
(43) Veröffentlichungstag der Anmeldung: **31.10.2007**
(21) Anmeldenummer: 06008604.8
(22) Anmeldetag: 26.04.2006
(51) Int. Cl.: B29C 45/00, B29C 51/02, B29C 69/00, B29C 39/26

(54) **Formmaschine zur Verarbeitung von flächigem Kunststoffmaterial**

(71) Anmelder: Protec Maschinen- und Kunststofftechnik GmbH, 91171 Obermässing (DE)
(72) Erfinder: Polster, Horst, 91091 Grossenseebach (DE); Frank, Josef, 91171 Obermässing (DE)
(74) Vertreter: Hafner, Dieter

(57) **Zusammenfassung**

Die Erfindung betrifft eine Formmaschine 1 zur Verarbeitung von flächigem Kunststoffmaterial, mit einem Maschinengestell 2, an welchem mindestens eine Einrichtung 3 zur Herstellung flächigen Kunststoffmaterials und mindestens eine Formvorrichtung 4, 5 zur nachfolgenden tiefziehenden Verformung des hergestellten flächigen Kunststoffmaterials angeordnet sind, wobei die Einrichtung 3 mindestens eine Formkammer 6, 7 zur Bildung des flächigen Formkörpers aufweist, die aus einem im Bereich der Formvorrichtung 4, 5 oder auf die Formvorrichtung 4, 5 zur tiefziehenden Verformung des Kunststoffmaterials zustellbaren Rahmenelement 8, 9 besteht, der beidseitig durch die Formkammer 6, 7 bildende Formabschlußplatten 10a, 10b, 11a, 11b verschließbar ist, wobei die Farmabschlußplatten 10a, 10b, 11a, 11b beidseitig der Rahmenelemente 8, 9 in den Rahmenbereich einfahrbar und aus dem Rahmenbereich ausfahrbar gelagert sind und entweder das Rahmenelement 8, 9, ein zustellbares Teilrahmenelement und/oder mindestens eine der Fonnabschlußplatten 10a, 10b, 11a, 11b mit einem Anschluß 14 zur Zuführung von Kunststoffmaterial zur Ausfüllung der Formkammer versehen ist.

## Beschreibung

Die Erfindung betrifft eine Formmaschine zur Verarbeitung von flächigem Kunststoffmaterial mit einem Maschinengestell, an welchem mindestens eine Einrichtung zur Herstellung des flächigen Kunststoffmaterials und mindestens eine Formvorrichtung zur nachfolgenden tiefziehenden Verformung des hergestellten flächigen Kunststoffmaterials angeordnet sind.

Eine derartige Maschine ist aus DE 103 59 006 A1 bekannt, an einem Maschinengestell ist zur Herstellung der Kunststoff-Flächenelemente eine Extrudereinrichtung vorgesehen, über die in Halterahmen Kunststoffplatten extrudiert werden, die unmittelbar im Anschluß an die Extrusion tiefziehend durch eine Formvorrichtung verformt werden können.

Der Aufbau und Betrieb einer derartigen Vorrichtung ist insofern nachteilig, als die Extrudereinrichtungen teuere "Kleiderbügeldüsen" aufweist.

Die Spannrahmen zur Halterung der extrudierten Platten sind ebenfalls aufwendig in der Herstellung.

Der Erfindung liegt die Aufgabe zugrunde, eine Vorrichtung mit den Merkmalen des Oberbegriffes des Anspruches 1 derart auszubilden, daß sie in der Herstellung günstiger ist, mit höheren Taktzahlen gefahren werden kann und durch sie bedarfsweise Kunststoffprodukte mit komplexerer Oberflächenstruktur, insbesondere mit Wandungen unterschiedlicher Stärke und Dichte hergestellt werden können. Diese Aufgabe wird durch die kennzeichnenden Merkmale des Anspruches 1 gelöst, vorteilhafte Weiterbildungen der Erfindung/Neuerung ergeben sich aus den Unteransprüchen 2-19.

Als Kern der Erfindung wird es angesehen, anstelle der Extrudereinrichtung zur Herstellung des flächigen Kunststoffmaterials eine Einrichtung mit einer Formkammer vorzusehen, die aus einem Rahmenteil und beidseitigen Formabschlußplatten besteht bzw. gebildet wird. Diese Formkammer ist mit einem Anschluß zur Zuführung von Kunststoffmaterial, insbesondere Spritzmaterial versehen und kann weitgehend wie eine bekannte Spritzform betrieben werden. Die Formabschlußplatten sind beidseitig des Rahmens in den Rahmenbereich einfahrbar und aus dem Rahmenbereich entfernbar gelagert und können in Weiterbildung der Erfindung zur beidseitigen Abdichtung des Rahmens die Formkammer bildend aufeinander zugestellt werden. Alternativ ist es aber auch möglich, am Rahmen z.B. nutartige Dichtelemente vorzusehen und die Formabschlußplatten parallel zur Erstreckungsebene des Rahmens in die Dichtelemente einzufahren, so daß dadurch eine dichte Formkammer gebildet wird.

In besonders vorteilhafter Weise erlaubt es die erfindungsgemäße Formmaschine, durch Formabschlußplatten mit einer nicht ebenen Oberfläche flächige Kunststoffplatten unterschiedlicher Stärke und/oder Struktur herzustellen, was durch einen Extrusionsvorgang nicht oder nur mit sehr großem Aufwand möglich ist. Dort, wo höhere Materialstärken für das Endprodukt benötigt werden, lassen sich diese mit Hilfe strukturierter Formabschlußplatten besonders leicht erzielen.

Vorteilhafter Weise sind an der Formmaschine zwei im wesentlichen identische, aus Rahmen oder Teilrahmen und Formabschlußplatten gebildete Formkammern vorgesehen, wobei die Maschine es in besonders vorteilhafter Weise erlaubt, zwei von der Materialstärke und Oberflächenstruktur her unterschiedliche Formlinge tiefziehend zu verformen und anschließend zu einem Hohlkörper miteinander zu verbinden.

An dem Maschinengestell ist sowohl eine Längsführungseinrichtung angeordnet, an welcher die mindestens eine Formvorrichtung zur tiefziehenden Verformung der extrudierten Kunststoffplatten angeordnet ist, als auch eine Querführungseinrichtung vorgesehen, die die Formabschlußplatten trägt. Die Querführungseinrichtung kann zwei Querführungen umfassen, wobei jede einzelne Querführung mit einem der beiden Rahmen zusammenwirkt.

Zur Befüllung der Formkammern sind eine oder zwei Füll- oder Spritzeinrichtung mit einem oder zwei Spritzkanälen vorgesehen, die an die aus Rahmen und Formabschlußplatten gebildeten Formkammern angeschlossen werden können, wodurch unterschiedliche Kunststoffe befüllt werden können. In vorteilhafter Weise läßt sich die Füll- oder Spritzeinrichtung an der Querführungseinrichtung anordnen. Sie kann simultan mit den Formabschlußplatten in den Bereich des oder der Rahmen eingefahren werden und wird in Betrieb gesetzt, sobald der Dichtvorgang zwischen Rahmen und Formabschlußplatten abgeschlossen ist. Die Formabschlußplatten ihrerseits sind an mit der Querführung verbundenen Haltern angeordnet und gegenüber den Haltern in Richtung der Längsführung zusätzlich verschiebbar gelagert, um den Dichtvorgang durchzuführen.

Die Querführungseinrichtung weist mindestens einen Schlitten auf, der die Formabschlußplatten quer zur Richtung der Längsführung in die Vorrichtung einführt. Dieser Schlitten ist mit Führungselementen versehen, die den oder die Rahmen fixierend umgreifen. Dadurch wird der in Längsrichtung bewegliche Rahmen exakt in Position gehalten, was sich auf die Dichtung zwischen den Kanten des Rahmens und den Formabschlußplatten positiv auswirkt.

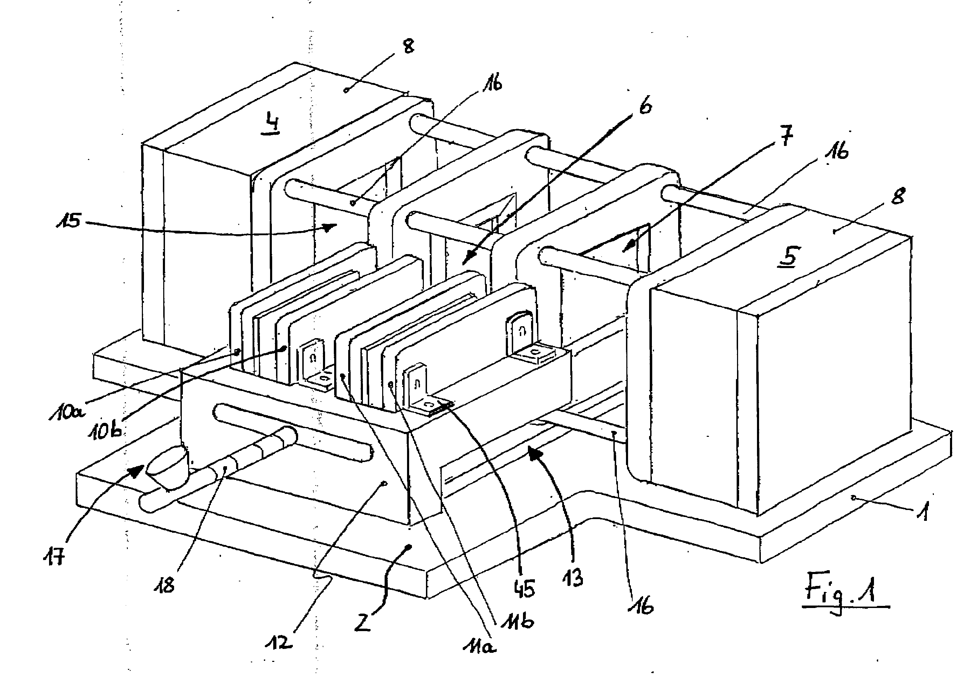

Die Erfindung ist anhand eines Ausftlhrungsbeispiels in den Zeichnungsfiguren näher erläutert. Diese zeigen
- Fig. 1: eine perspektivische, schematisierte Darstellung der Formmaschine, wobei sich die die Formkammer bildenden Formabschlußplatten in einer ausgefahrenen Stellung befinden;

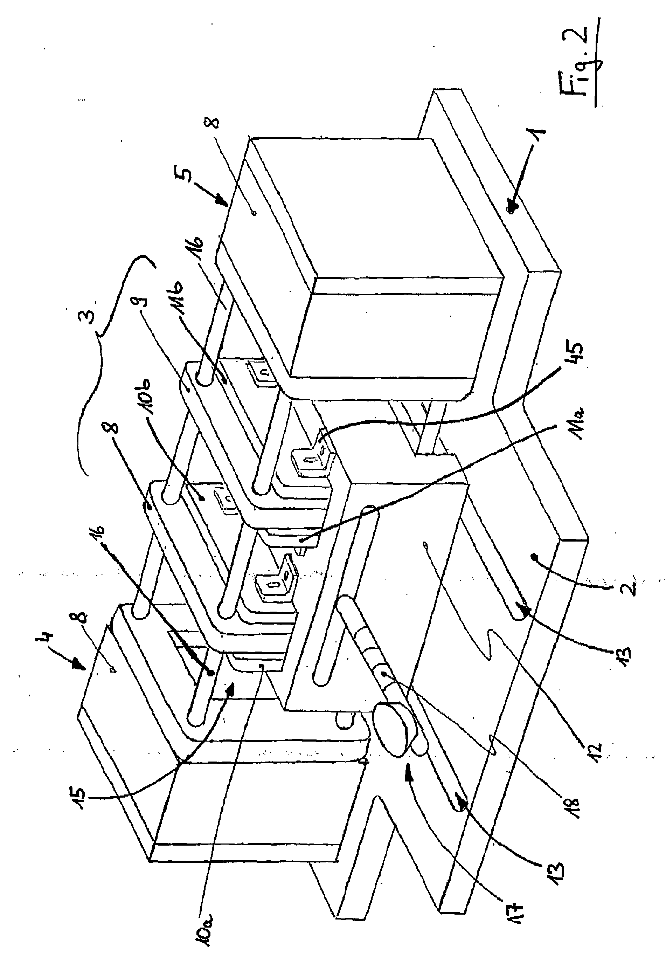

- Fig. 2: eine Darstellung gemäß Fig. 1 mit eingefahrenen Formabschlußplatten;
- Fig. 3: eine perspektivische Detailansicht der Rahmenelemente;
- Fig.4: einen Schnitt durch die Rahmenelemente und die eingefahrenen Formabschlußplatten;
- Fig. 5: eine Seitenansicht der Rahmen mit Sicherungselementen für die Formabschlußplatten;
- Fig. 6a - g: die Formmaschine in unterschiedlichen Betriebszuständen.

Zunächst wird auf die Zeichnungsfiguren 1 und 2 Bezug genommen.

Die insgesamt mit 1 bezeichnete Formmaschine zur Verarbeitung von flächigem Kunststoffmaterial weist im wesentlichen ein Maschinengestell 2 auf, an dem eine Einrichtung 3 zur Herstellung des flächigen Kunststoffmaterials und mindestens eine Formvorrichtung 4, 5 zur nachfolgenden tiefziehenden Verformung des hergestellten flächigen Kunststoffmaterials angeordnet sind.

Die Einrichtung 3 weist beim dargestellten Ausführungsbeispiel zwei Formkammern 6, 7 auf, die in den Zeichnungsfiguren 1 und 2 nicht unmittelbar dargestellt sind, da sie sich in einem geschlossenen Zustand befinden. Die Formkammern 6, 7 werden durch je ein Rahmenelement 8, 9 gebildet, die beidseitig durch die Formkammern 6, 7 bildende Formabschlußplatten 10a, 10b, 11a, 11b verschließbar sind.

Die Formabschlußplatten 10a, 10b, 11a, 11b sind beidseitig der Rahmenelemente 8, 9 in den Rahmenbereich einfahrbar und aus dem Rahmenbereich ausfahrbar gelagert und dazu an einem Schlitten 12 einer Querführungseinrichtung 13 befestigt. Entweder das Rahmenelement 8 bzw. 9, ein zustellbares Teilrahmenelement oder mindestens eine der beiden Formabschlußplatten 10a, 10b bzw. 11a, 11b, die jeweils ein Rahmenelement 8, 9 beaufschlagen, sind mit einem Anschluß 14 zur Zuführung von Kunststoffmaterial zur Ausfüllung der Formkammern 6, 7 versehen.

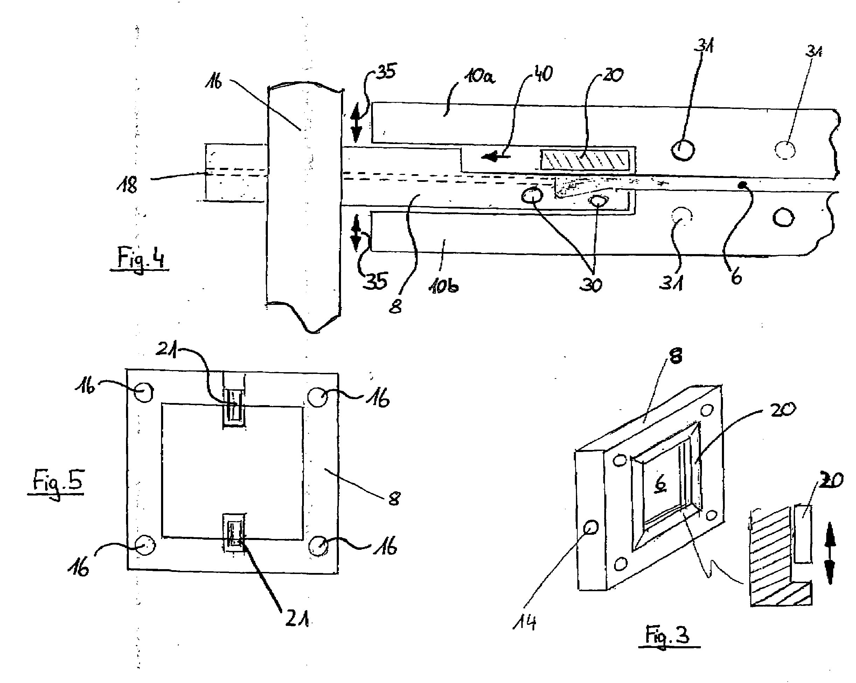

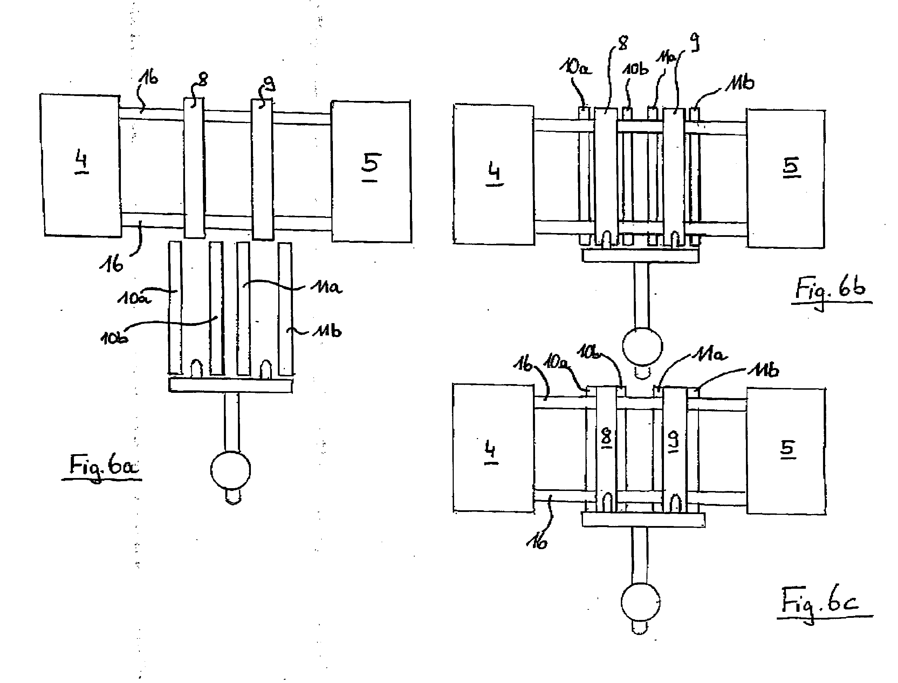

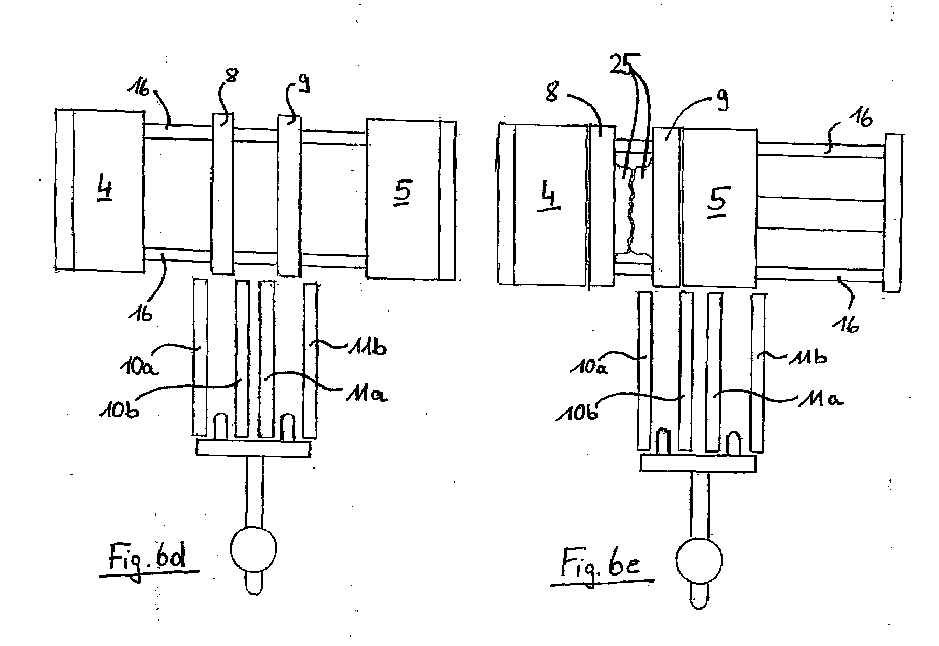

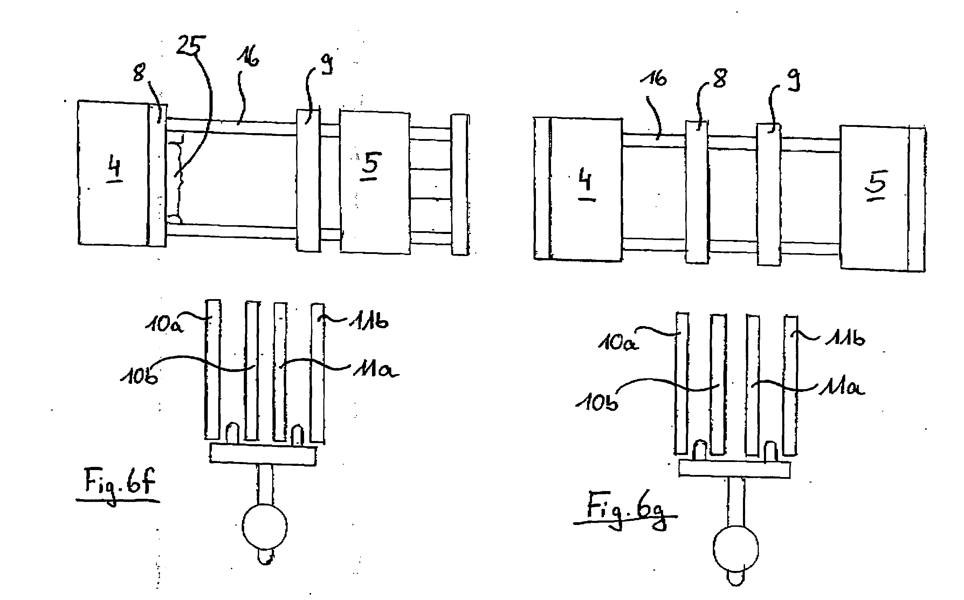

Die Formabschlußplatten 10a, 10b, 11a, 11b sind zur beidseitigen Abdichtung des ihnen zugeordneten Rahmenelementes 8 bzw. 9 die jeweilige Formkammer 6, 7 bildend aufeinander zustellbar, was sich aus den Details der Figuren 6b, 6c und den Doppelpfeilen 35 gemäß Fig. 4 besonders deutlich ergibt. Insgesamt sind an den Rahmenelementen, 8, 9 mit den Formabschlußplatten 10a, 10b, 11a, 11b zusammenwirkende Dichtelemente angeordnet, diese können unterschiedliche Ausbildung haben, z.B. nutartig sein, so daß die Formabschlußplatten 10a, 10b, 11a, 11b direkt in die Nuten eingefahren werden. Es sind aber auch andere Ausbildungen von Dichtelementen zwischen den Formabschlußplatten 10a, 10b, 11a, 11b und den Rahmenelementen 8, 9 denkbar.

Die Formabschlußplatten 10a, 10b, 11a, 11b können auf ihren den Formkammern 6, 7 zugewandten Seiten mit Erhebungen oder Einziehungen versehen sein, um Formteile unterschiedlicher Materialstärke oder Struktur bilden zu können.

Auch die Rahmenelemente 8, 9 müssen nicht notwendiger Weise einstückig als Vierkantrahmen ausgebildet sein, sie können durch relativ zueinander bewegbare Teilrahmenelemente gebildet werden, die in zusammengefahrener Stellung dann den Rahmen bilden, der die Formkammer peripher berandet.

Neben der Querführungseinrichtung 13 ist an dem Maschinengestell 2 auch eine Längsführungseinrichtung 15 vorgesehen, die im wesentlichen aus sich zwischen den Formvorrichtungen 4, 5 erstreckenden Führungselementen 16 besteht, die beispielsweise als Führungsstangen ausgebildet sein können. An diesen sind sowohl die Rahmenelemente 8, 9 als auch mindestens eine der beiden Formvorrichtungen 4, 5 längs verschiebbar.

An der Querführungseinrichtung 13 ist ferner mindestens eine Füll- oder Spritzeinrichtung 17 mit einem Füll- oder Spritzkanal 18 angeordnet, die zusammen mit den Formabschlußplatten 10a, 10b, 11a, 11b in den Bereich der Längsführung einfahrbar ist und in eingefahrener Stellung an die gebildeten Formkammern 6, 7 anschließbar ist. Alle Zustellbewegungen, die zum Einfahren des Schlittens 12 in den Bereich der Rahmenelemente 8, 9 sowie zum Bewegen der an der Längsführungseinrichtung 15 angeordneten Teile erforderlich sind, sind motorisch angetrieben.

Um die in den Formkammern 6, 7 hergestellten flachen Kunststoffteile aus den Formkammern 6, 7 frei zu geben, sind die Rahmenelemente 8, 9 an ihren den Formkammern 6, 7 zugewandten Kanten mit Spannrahmenschiebern 20 versehen, die in einer inneren Stellung zur Berandung der Formkammer beitragen und in einer äußeren Stellung die gebildeten und zumindest teilerstarrten Kunststoffplatten freigeben können.

An den Rahmenelementen 8, 9 sind Sicherungselemente 21 z.B. in Form von Sperriegeln angeordnet, die mit den Randbereichen der Formabschlußplatten 10, 11 zusammenwirken und dafür sorgen, daß die Formabschlußplatten 10a, 10b, 11a, 11b bei Erhöhung des Innendrucks der Formkammern 6, 7 ihre exakte Position beibehalten. Dadurch werden motorische Antriebselemente entlastet, die die Formabschlußplatten 10a, 10b, 11a, 11b in Richtung der Rahmenelemente 8, 9 zustellen.

In an sich bekannter Weise sind an den beiden Formvorrichtungen 4, 5 Blaskästen angeordnet, in denen zum Tiefziehvorgang formbildende Formelemente 25 vorgesehen sind. Diese Formelemente 25 sind in Richtung der Längsführungseinrichtung 15 auf die zwischen ihnen angeordneten Rahmenelemente 8, 9 zustellbar. Zur Herstellung von Hohlkörpern aus den beiden in den Rahmenelementen 8, 9 angeordneten Kunststoffteilen nach dem Tiefziehvorgang sind auch die Rahmenelemente 8, 9 in Richtung der Längsführungseinrichtung 15 aufeinander zustellbar.

Nicht sichtbar in den zeichnungsfiguren ist, daß der die Formabschlußplatten 10a, 10b, 11a, 11b quer zur Richtung der Längsführungseinrichtung 15 in die Vorrichtung einführende Schlitten 12 mit nutartigen Führungselementen versehen ist, die die Rahmenelemente 8, 9 fixierend um-oder untergreifen, Dadurch wird im Bereich der Formkammern eine weitere Stabilisierung erreicht.

Nachfolgend wird auf die einen Funktionsablauf der Vorrichtung erläuternde Figur 6 Bezug genommen.

Zur Herstellung der flächigen Kunststoffteile müssen gemäß Fig. 6a zunächst die außerhalb der Längsfuhrungseinrichtung 15 angeordneten Formabschlußplatten 10a, 10b, 11a, 11b mit dem Schlitten 12 und der Füllvorrichtung in die Formmaschine 1 eingefahren werden. Sobald sich die Formabschlußplatten 10a, 10b, 11a, 11b in der eingefahrenen Stellung, d.h. deckungsgleich mit den ihnen zugeordneten Rahmenelementen 8, 9 befinden, werden sie gemäß Figur 6c auf die Rahmenelemente 8, 9 zugestellt und bilden dadurch die verschlossenen Formkammern 6, 7. Gleichzeitig mit den Formabschlußplatten 10a, 10b, 11a, 11b werden auch die Elemente der Füll- oder Spritzeinrichtung 17 in Position gebracht, so daß die Formkammern 6, 7 befüllt werden können. Nach dem Füllvorgang werden Randbereiche der Formkammern 6, 7 gezielt gekühlt und im Bedarfsfall Innenbereiche der Formkammern 6, 7 nachgeheizt, um den Innenbereich der flächigen Kunststoffelemente für eine tiefziehende Verformung geschmeidig zu halten und eine ausreichende Stabilität der Randbereiche zu gewährleisten. Dazu können Kühlungselemente 30 in den Rahmenelementen 8, 9 bzw. Heizungselemente 31 in den Formabschlußplatten 10a, 10b, 11a, 11b vorgesehen werden.

Das in den jeweiligen Rahmenelementen 8, 9 verbleibende noch heiße Kunststoffplattenmaterial wird nun zusammen mit den Rahmenelementen 8, 9 gegen den jeweiligen Blaskasten gefahren und abgedichtet, durch eine Beaufschlagung mit Vakuum erfolgt die Verformung durch zeitgleiches Herausfahren des zugeordneten Formelementes 25 aus dem Blaskasten. Nach der tiefziehenden Verformung werden beide sich gegenüberliegenden Rahmenelemente 8, 9 zusammengeführt, so daß die tiefgezogenen Kunststoffelemente zumindest bereichsweise zu einem Hohlkörper verschweißt werden können. Als Zwischenschritt ist es möglich, zwischen den beiden Rahmenelementen 8, 9 Einlegeteile zu positionieren, die dann in den gebildeten Hohlkörper integriert sind.

Zur Entformung aus den Rahmenelementen 8, 9 werden die Spannrahmenschieber 20 in ihre äußere Position verfahren (in Pfeilrichtung 40 gem. Fig. 4) und die Formlinge dadurch freigegeben.

Beim dargestellten Ausführungsbeispiel erfolgt die Befüllung der Formkammern 6, 7 seitlich, es liegt selbstverständlich auch im Rahmen der Erfindung, z.B. oberhalb der Rahmenelemente 8, 9 eine Spritz- oder Füllvorrichtung anzuordnen und die Spritzkanäle in den die Formkammer bildenden Elementen nach oben weisen zu lassen.

Es liegt ferner im Rahmen der Erfindung, beide Formvorrichtungen 4, 5 entlang der Längsführngseinrichtung 15 aufeinander zu zu verfahren oder eine Formvorrichtung 4 bzw. 5 fest zu montieren und nur die andere zu verfahren. Außerdem kann die Formmaschine 1 eine gesonderte Schweißvorrichtung aufweisen, die z.B. in den Bereich der Längsführungseinrichtung 15 eingefahren wird, sobald der Schlitten 12 nach der anderen Seite ausgefahren ist.

## Patentansprüche

1. Formmaschine (1) zur Verarbeitung von flächigem Kunststoffmaterial, mit einem Maschinengestell (2), an welchem mindestens eine Einrichtung (3) zur Herstellung flächigen Kunststoffmaterials und mindestens eine Formvorrichtung (4, 5) zur nachfolgenden tiefziehenden Verformung des hergestellten flächigen Kunststoffmaterials angeordnet sind,
**dadurch gekennzeichnet, daß**
die Einrichtung (3) mindestens eine Formkammer (6, 7) zur Bildung des flächigen Formkörpers aufweist, die aus einem im Bereich der Formvorrichtung (4, 5) oder auf die Formvorrichtung (4, 5) zur tiefziehenden Verformung des Kunststoffmaterials zustellbaren Rahmenelement (8, 9) besteht, der beidseitig durch die Formkammer (6, 7) bildende Formabschlußplatten (10a, 10b, 11a, 11b) verschließbar ist, wobei die Formabschlußplatten (10a, 10b, 11a, 11b) beidseitig der Rahmenelemente (8, 9) in den Rahmenbereich einfahrbar und aus dem Rahmenbereich ausfahrbar gelagert sind und entweder das Rahmenelement (8, 9), ein zustellbares Teilrahmenelement und/oder mindestens eine der Formabschlußplatten (10a, 10b, 11a, 11b) mit einem Anschluß (14) zur Zuführung von Kunststoffmaterial zur Ausfüllung der Formkammer versehen ist.

2. Vorrichtung nach Anspruch 1,
**dadurch gekennzeichnet, daß**
die Formabschlußplatten (10a, 10b, 11a, 11b) zur beidseitigen Abdichtung des Rahmenelementes (8, 9) die Formkammer (6, 7) bildend aufeinander zustellbar sind.

3. Vorrichtung nach Anspruch 1 oder 2,
**dadurch gekennzeichnet, daß**
am Rahmenelement (8, 9) insbesondere nutartige Dichtelemente angeordnet sind und die Formabschlußplatten (10a, 10b, 11a, 11b) parallel zur Erstreckungsebene des Rahmens (8, 9) in diese Dichtelemente einführbar sind.

4. Vorrichtung nach einem der Ansprüche 1-3,
**dadurch gekennzeichnet, daß**
die Formabschlußplatten (10a, 10b, 11a, 11b) zur Bildung von Formteilen unterschiedlicher Materialstärke und/oder Struktur mit Erhebungen und/oder Vertiefungen versehen sind.

5. Vorrichtung nach einem der vorhergehenden Ansprüche,
**dadurch gekennzeichnet, daß**
das Rahmenelement (8, 9) durch relativ zueinander bewegbare Teilrahmenelemente gebildet ist.

6. Vorrichtung nach einem der vorhergehenden Ansprüche,
**dadurch gekennzeichnet, daß**
an dem Maschinengestell (2) sowohl eine Längsführungseinrichtung (15) als auch eine Querführungseinrichtung (13) angeordnet sind, wobei an der Längsführeinrichtung (15), die mindestens eine Formvorrichtung (4, 5) zur tiefziehenden Verformung der extrutierten Kunststoffplatten angeordnet ist und an der Querfuhrungseinrichtung (13) die Formabschlußplatten (10a, 14b, 11a, 11b) verschiebbar angeordnet sind.

7. Vorrichtung nach einem der vorhergehenden Ansprüche,
**dadurch gekennzeichnet, daß**
zwei Rahmenelemente (8, 9) im wesentlichen parallel an dem Maschinengestell (2) angeordnet sind.

8. Vorrichtung nach einem der vorhergehenden Ansprüche,
**dadurch gekennzeichnet, daß**
pro Rahmenelement (8, 9) zwei im wesentlichen parallel angeordnete Formabschlußplatten (10a, 10b, 11a, 11b) parallel zu jedem Rahmen in den Bereich der Längsführungseinrichtung (15) einfahrbar an der Queführungseinrichtung (13) befestigt sind und in Richtung der Längsführungseinrichtung (15) aufeinander zustellbar sind.

9. Vorrichtung nach einem der vorhergehenden Ansprüche,
**dadurch gekennzeichnet, daß**
an dem Maschinengestell (2) eine Füll- oder Spritzeinrichtung (17) mit einem Füll- oder Spritzkanal (18) angeordnet ist, die an die aus Rahmenelement (en) (8, 9) und Formabschlußplatten (10a, 10b, 11a, 11b) gebildeten Formkammer(n) (6, 7) anschließbar ist.

10. Vorrichtung nach einem der vorhergehenden Ansprüche,
**dadurch gekennzeichnet, daß**
die Füll-/Spritzeinrichtung (17) an der Querführungseinrichtung (13) angeordnet ist.

11. Vorrichtung nach einem der vorhergehenden Ansprüche,
**dadurch gekennzeichnet, daß**
die Füll-/Spritzeinrichtung (17) simultan mit den Formabschlußplatten (10a, 10b, 11a, 11b) in den Bereich des/der Rahmenelement(e) (8, 9) einfahrbar ist.

12. Vorrichtung nach einem der vorhergehenden Ansprüche,
**dadurch gekennzeichnet, daß**
die Formabschlußplatten (10a, 10b, 11a, 11b) an mit der Querführungseinrichtung (13) verbundenen Haltern (45) angeordnet sind und gegenüber den Haltern in Richtung der Längsführungseinrichtung (15) verschiebbar gelagert sind.

13. Vorrichtung nach einem der vorhergehenden Ansprüche,
**dadurch gekennzeichnet, daß**
die Verschiebung der Formabschlußplatten (10a, 10b, 11a, 11b) in Richtung der Längsführungseinrichtung (15) und Querführungseinrichtung (13) motorisch antreibbar ist.

14. Vorrichtung nach einem der vorhergehenden Ansprüche,
**dadurch gekennzeichnet, daß**
die Rahmenelemente (8, 9) mit aufklappbaren oder aufschiebbaren Rahmenbereichen (Spannrahmenschiebern (20)) versehen sind.

15. Vorrichtung nach einem der vorhergehenden Ansprüche,
**dadurch gekennzeichnet, daß**
an den Rahmenelementen (8, 9) Sicherungselemente (21) angeordnet sind; die mit den Randbereichen der Formabschlußplatten (10a, 10b, 11a, 11b) dichtend zusammenwirken.

16. Vorrichtung nach einem der vorhergehenden Ansprüche,
**dadurch gekennzeichnet, daß**
die Formvorrichtung (4, 5) zur tiefziehenden Verformung Blaskästen aufweist, in welchen formbildende Formelemente (25) angeordnet sind.

17. Vorrichtung nach einem der vorhergehenden Ansprüche,
**dadurch gekennzeichnet, daß**
die Blaskästen und/oder die Formelemente (25) in Richtung der Längsführungseinrichtung (15) auf die zwischen ihnen angeordneten Rahmenelemente (8, 9) zustellbar sind.

18. Vorrichtung nach einem der vorhergehenden Ansprüche,
**dadurch gekennzeichnet, daß**
die Rahmenelemente (8, 9) in Richtung der Längsführungseinrichtung (15) derart aufeinander zustellbar sind, daß die beiden in ihnen gehaltenen tiefgezogenen Kunststoffteile miteinander verbindbar sind.

19. Vorrichtung nach einem der vorhergehenden Ansprüche,
**dadurch gekennzeichnet, daß**
im Rahmenbereich in Richtung der Längsführungseinrichtung (15) verschiebbare Werkzeugelemente zur pressenden Verbindung der beiden Kunststoffelemente angeordnet sind.

20. Vorrichtung nach einem der vorhergehenden Ansprüche,
**dadurch gekennzeichnet, daß**
der die Formabschlußplatten (10a, 10b, 11a, 11b) quer zur Richtung der Längsführungseinrichtung (15) in die Vorrichtung einführende Schlitten (12) mit Führungsnuten versehen ist, die den/die Rahmenelemente (8, 9) fixierend umgreifen.

21. Vorrichtung nach einem der vorhergehenden Ansprüche,
**dadurch gekennzeichnet, daß**
die Führungsnuten die Rahmenelemente (8, 9) auf sich gegenüberliegenden Seiten führend umgreifen.
